# EUROPEAN PATENT APPLICATION

(11) **EP 2 224 281 A2**
(43) Date of publication of application: **01.09.2010**
(21) Application number: 10001804.3
(22) Date of filing: 23.02.2010
(51) Int. Cl.: G02F 1/13363, G02F 1/1335

(54) **Substrate for liquid crystal display device and liquid crsytal display device**

(30) Priority: 27.02.2009 JP 2009045276
(71) Applicant: FUJIFILM Corporation, Tokyo 106-0031 (JP)
(72) Inventor: Nakajima, Masao, Minami-ashigara-shi Kanagawa 250-0193 (JP); Itou, Hideaki, Minami-ashigara-shi Kanagawa 250-0193 (JP)
(74) Representative: HOFFMANN EITLE

(57) **Abstract**

A substrate for liquid crystal display device comprising, between a substrate and a color filter layer, a positive uniaxial optically anisotropic layer having an optical axis in an in-plane direction of the substrate and a negative uniaxial optically anisotropic layer having an optical axis in a direction perpendicular to the substrate surface, which can provide a vertical alignment (VA)-mode liquid crystal display device with excellent contrast-viewing angle characteristics.

## Description

### TECHNICAL FIELD

The present invention relates to a substrate for liquid crystal display device and a liquid crystal display device. More particularly, the present invention relates to a substrate for liquid crystal display device which is suitable for a VA-mode liquid crystal display device.

### BACKGROUND ART

A CRT (cathode ray tube) has been mainly employed in various display devices used for office automation (OA) equipment such as a word processor, a notebook-sized personal computer and a personal computer monitor, mobile phone terminal and television set. In recent years, a liquid crystal display device has more widely been used in place of a CRT, because of its thinness, lightweight and low power consumption. A liquid crystal display device usually comprises a liquid crystal cell and polarizing plates. The polarizing plate usually has protective films and a polarizing film, and is obtained typically by dying a polarizing film composed of a polyvinyl alcohol film with iodine, stretching the film, and laminating the film with the protective films on both surfaces. A transmissive liquid crystal display device usually comprises polarizing plates on both sides of a liquid crystal cell, and occasionally comprises one or more optical compensation films. A reflective liquid crystal display device usually comprises a reflector plate, a liquid crystal cell, one or more optical compensation films, and a polarizing plate in this order. A liquid crystal cell comprises liquid crystal molecules, two substrates encapsulating the liquid crystal molecules, and electrode layers applying voltage to the liquid crystal molecules. The liquid crystal cell switches ON and OFF displays depending on variation in alignment state of the liquid crystal molecules, and is applicable both to transmission type and reflective type, of which display modes ever proposed include TN (twisted nematic), IPS (in-plane switching), OCB (optically compensatory bend) and VA (vertically aligned) ECB (electrically controlled birefringence), and STN(super twisted nematic). Color and contrast displayed by the conventional liquid crystal display device, however, vary depending on the viewing angle. Therefore, it cannot be said that the viewing angle characteristics of the liquid crystal display device is superior to those of the CRT.

In order to improve the viewing angle characteristics, retardation films for viewing-angle optical compensation have been used. There have been proposed various LCDs, employing an optical compensation film having an appropriate optical property for each of the above various modes, and being excellent in contrast characteristics without dependency on viewing angles. An OCB, VA or IPS modes are known as a wide-viewing mode, and LCDs employing such a mode can give a good contrast characteristic in all around view, and, then, become widely used as a home screen such as TV. Further, in recent years, a wide screen of over 40 inches has been also proposed.

VA mode, which affords the same good display characteristics as TN mode when viewed from the front, but also achieves wide viewing angle characteristics through the application of an optical compensation film to compensate for the viewing angle, has now become the most widespread LCD mode. In VA mode, wide viewing angle characteristics are achieved through the use of a uniaxially oriented retardation plate having positive refractive index anisotropy in the direction of the film surface (a positive a-plate) and a negative uniaxially oriented retardation plate having an optical axis in a direction perpendicular to the film surface (negative c-plate) (see Japanese Unexamined Patent Publication (KOKAI) Heisei No. 10-153802 (pp. 12 and 13, Fig. 54)).

Since a retardation plate is bonded with adhesive at a prescribed angle with respect to a polarizing plate for use, the contrast ends up decreasing due to reflection at the boundary with the adhesive, which has a lower refractive index than the polarizing plate or retardation film. Further, the dimensions of the retardation film vary with temperature and humidity, resulting in the problem of LCD corner blurring. Therefore, there has been proposed in recent years some methods wherein a retardation layer is formed in a substrate for liquid crystal display device (for example, Journal of the SID 15/3, 2007 193-197).

When a retardation layer is formed in a substrate for liquid crystal display device, formation of the retardation layer on a already-formed color filter layer may cause problems such as orientation defect of the retardation layer originated from the unevenness of the color filter layer surface, and insufficiency in the display of pixels due to decoloring generated by UV radiation or heat treatment in the retardation layer formation. The above problems can be prevented by forming a color filter after the formation of the retardation layer as shown, for example, in Japanese Unexamined Patent Publication (KOKAI) No. 2008-281989. However, there have been no examples of a substrate for liquid crystal display device having a positive a-plate layer and a negative c-plate layer at the same time, wherein a color filter is formed after the formation of the retardation layer

### SUMMARY OF THE INVENTION

The object of the present invention is to provide a substrate for liquid crystal display device that can provide a vertical alignment (VA) -mode liquid crystal display device with excellent contrast-viewing angle characteristics, and a liquid crystal display device prepared by using the substrate for liquid crystal display device.

The present inventors conducted intensive research, and as a result successfully produced a substrate for liquid crystal display device having both of a negative c-plate optically anisotropic layer and a positive a-plate optically anisotropic layer between a substrate and a color filter layer and found that the substrate thus produced was sufficiently contribute to the improvement of the viewing angle characteristics of a liquid crystal display device. The present invention was devised on the basis of this finding.

The present invention thus provides [1] to [15] as follows.
[1] A substrate for liquid crystal display device comprising, between a substrate and a color filter layer, a positive uniaxial optically anisotropic layer having an optical axis in an in-plane direction of the substrate and a negative uniaxial optically anisotropic layer having an optical axis in a direction perpendicular to the substrate surface.
[2] The substrate for liquid crystal display device according to [1] comprising the substrate, the negative uniaxial optically anisotropic layer having an optical axis in a direction perpendicular to the substrate surface, the positive uniaxial optically anisotropic layer having an optical axis in an in-plane direction of the substrate, and the color filter layer in this order.
[3] The substrate for liquid crystal display device according to [2], wherein the positive uniaxial optically anisotropic layer having an optical axis in an in-plane direction of the substrate is formed directly on the negative uniaxial optically anisotropic layer having an optical axis in a direction perpendicular to the substrate surface, and the negative uniaxial optically anisotropic layer functions as an alignment layer.
[4] The substrate for liquid crystal display device according to [1] comprising the substrate, the positive uniaxial optically anisotropic layer having an optical axis in an in-plane direction of the substrate, the negative uniaxial optically anisotropic layer having an optical axis in a direction perpendicular to the substrate surface, and the color filter layer in this order.
[5] The substrate for liquid crystal display device according to any one of [1] to [4], which comprises an alignment layer and the positive uniaxial optically anisotropic layer having an optical axis in an in-plane direction of the substrate which is formed directly on the alignment layer.
[6] The substrate for liquid crystal display device according to any one of [1] to [5], wherein the negative uniaxial optically anisotropic layer having an optical axis in a direction perpendicular to the substrate surface consists of a polyimide material.
[7] The substrate for liquid crystal display device according to any one of [1] to [6], wherein the positive uniaxial optically anisotropic layer having an optical axis in an in-plane direction of the substrate or the negative uniaxial optically anisotropic layer having an optical axis in a direction perpendicular to the substrate surface is a layer formed of a composition comprising a liquid crystal compound having at least one reactive group.
[8] The substrate for liquid crystal display device according to [7], wherein the reactive group is a radically polymerizable group or a cationically polymerizable group.
[9] The substrate for liquid crystal display device according to [8], wherein the radically polymerizable group is selected from the group consisting of acrylic group and methacrylic group, and the cationically polymerizable group is selected from the group consisting of vinyl ether group, oxetanyl group, and epoxy group.
[10] The substrate for liquid crystal display device according to any one of [7] to [9], wherein the liquid crystal compound for the negative uniaxial optically anisotropic layer having an optical axis in a direction perpendicular to the substrate surface is a discotic liquid crystal.
[11] The substrate for liquid crystal display device according to any one of [7] to [10], wherein the liquid crystal compound for the positive uniaxial optically anisotropic layer having an optical axis in an in-plane direction of the substrate is a rod-like liquid crystal compound.
[12] The substrate for liquid crystal display device according to any one of [7] to [11], wherein the liquid crystal compound for the positive uniaxial optically anisotropic layer having an optical axis in an in-plane direction of the substrate has at least one radically polymerizable group and at least one cationically polymerizable group at the same time.
[13] The substrate for liquid crystal display device according to any one of [1] to [12], wherein the retardation of the positive uniaxial optically anisotropic layer having an optical axis in an in-plane direction of the substrate is formed in a patterned manner corresponding to the colors displayed by the color filter.
[14] A liquid crystal display device which has the substrate for liquid crystal display device according to any one of [1] to [13].
[15] The liquid crystal display device according to [14], employing VA mode as a liquid crystal orientation mode.

### BRIEF DESCRIPTION OF THE DRAWINGS

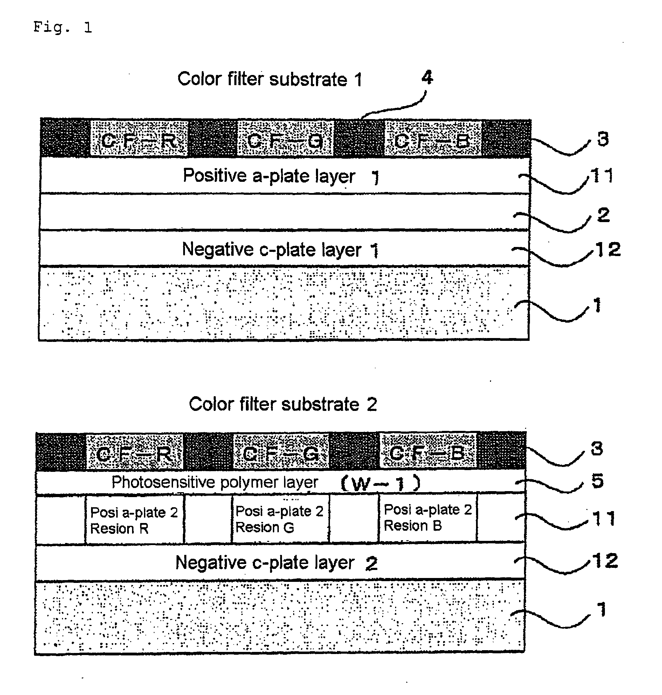

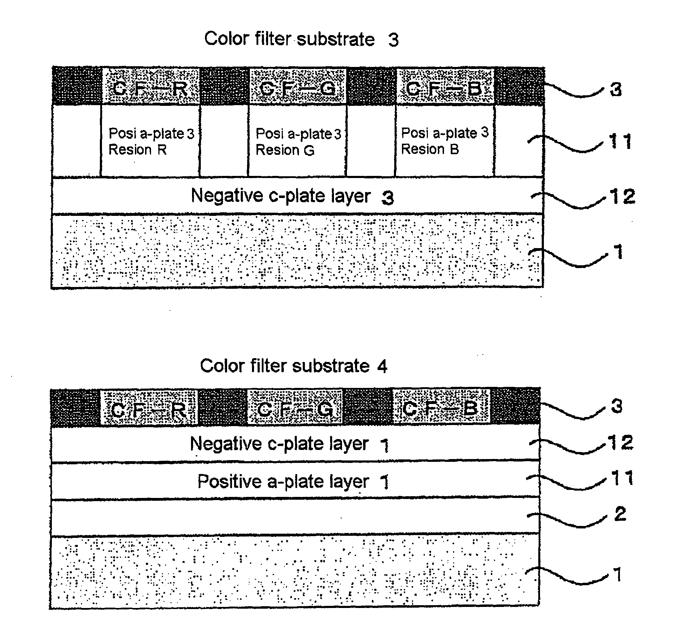

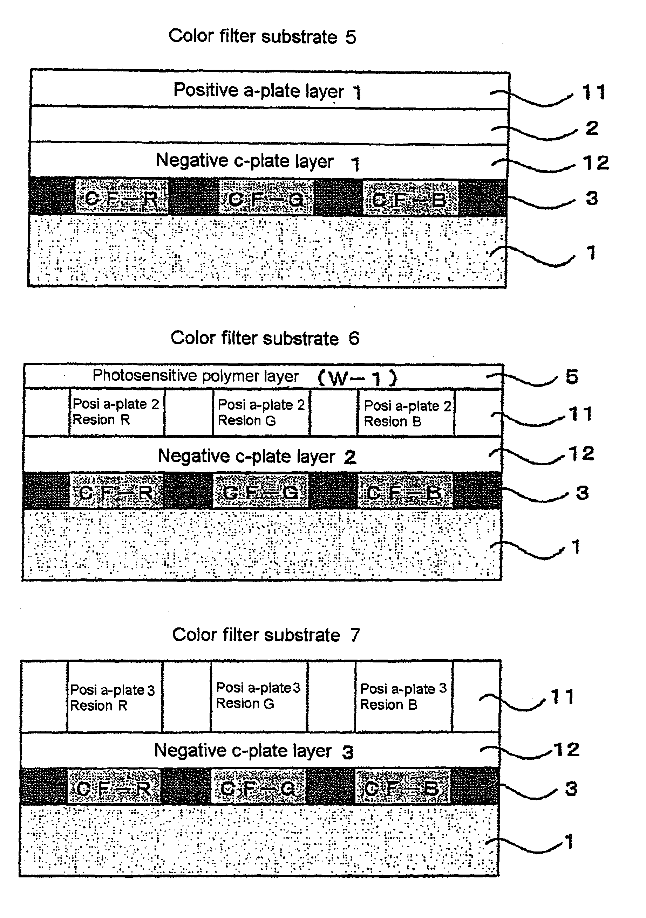

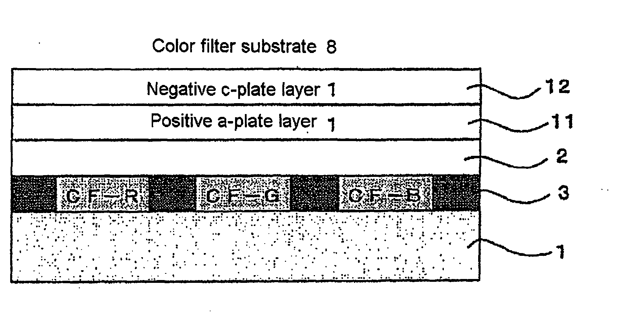

Fig. 1 is schematic sectional views of color filter substrates 1 to 8 prepared in Examples.

Reference numerals used in the figure represents the followings:
- 1: glass substrate;
- 2: alignment layer;
- 3: color filter layer;
- 4: black matrix;
- 5: photosensitive polymer layer;
- 11: positive a-plate optically anisotropic layer;
- 12: negative c-plate optically anisotropic layer.

### EMBODIMENT OF THE INVENTION

Paragraphs below will detail the present invention.

In the specification, ranges indicated with "to" mean ranges including the numerical values before and after "to" as the minimum and maximum values.

It is to be noted that, regarding angles, the term "substantially" in the context of the present specification means that a tolerance of less than ±5° with respect to the precise angles can be allowed. Difference from the precise angles is preferably less than 4°, and more preferably less than 3°. It is also to be noted that the term "The Re value is substantially zero" in the context of the present specification means that the Re value is 5 nm or less. It is also to be noted that the term "visible light" in the context of the present specification means light of a wavelength falling within the range from 400 to 700 nm.

The substrate for liquid crystal display device of the present invention is **characterized in that** it has a positive uniaxial optically anisotropic layer having an optical axis in an in-plane direction of a substrate and a negative uniaxial optically anisotropic layer having an optical axis in a direction perpendicular to the substrate surface between the substrate and a color filter layer. In the present specification, "a negative uniaxial optically anisotropic layer having an optical axis in a direction perpendicular to the substrate surface" may be referred to as "a negative c-plate optically anisotropic layer", and "a positive uniaxial optically anisotropic layer having an optical axis in an in-plane direction of a substrate" may be referred to as "a positive a-plate optically anisotropic layer".

Unless specifically stated otherwise, the terms "substrate for liquid crystal display device" and "substrate" are not used interchangeably in the present specification.

The materials, manufacturing method, and the like of the substrate for liquid crystal display device of the present invention will be described in detail below. However, the present invention is not limited to these embodiments. Additional embodiments can be implemented by referencing the description given below and conventionally known methods. The present invention is not limited to the embodiments set forth below.

### [Substrate]

The substrate used for the substrate for liquid crystal display device of the present invention is not particularly limited as long as it is transparent. The substrate may be any of known glasses such as soda glass sheet having a silicon oxide film formed on the surface thereof, low-expansion glass, non-alkali glass, or silica glass; or a transparent substrate formed of polymer. In the substrate for liquid crystal display device, the substrate is preferred to have heat-resistance to undergo the high temperature upon driving the liquid crystals. As such substrate having heat-resistance, glass sheet, polyimide, polyether sulfone, heat-resisting polycarbonate, or polyethylene naphthalate is preferred. Glass sheet is particularly preferred from the viewpoint of price, transparency, and heat-resistance. The substrate can be improved in the adhesiveness with another layer by being preliminarily subjected to a coupling treatment. The coupling treatment is preferably carried out by using the method described in Japanese Unexamined Patent Publication (KOKAI) No. 2000-39033. The thickness of the substrate is preferably 100 to 1200µm in general, more preferably 300 to 1000 µm, although being not specifically limited.

### [Optically Anisotropic Layer]

The optically anisotropic layer of the present invention is not specifically limited so far as the layer gives a retardation, which is not substantially zero, for a light incoming in a direction, that is, so far as the layer has an optical characteristic not understood as being isotropic. The layer is preferably formed by curing a liquid crystal layer comprising at least one species of liquid crystal compound by ultraviolet irradiation, from the viewpoint that the optical characteristics can readily be controlled. The optical characteristics of the optically anisotropic layer can be controlled in a desirable range by changing, for example, species of the liquid crystal compound, types and amount of an orientation agent to be mixed, types of an alignment layer and the condition of rubbing treatment of the alignment layer, and the condition of the ultraviolet irradiation. The optically anisotropic layer is preferably 0.1 to 20 µm, more preferably 0.5 to 10 µm, in thickness.

An optically anisotropic layer formed of a composition containing a liquid crystal compound will be explained below.

### [Liquid crystal compound]

The liquid crystal compounds can generally be classified by molecular geometry into rod-like one and discotic one. Each category further includes low-molecular type and high-molecular type. The high-molecular type generally refers to that having a degree of polymerization of 100 or above ("Kobunshi Butsuri-Soten'i Dainamikusu (Polymer Physics-Phase Transition Dynamics), by Masao Doi, p.2, published by Iwanami Shoten, Publishers, 1992).

In the present invention, a positive a-plate optically anisotropic layer is preferably formed of a composition containing a rod-like liquid crystal compound, and a negative c-plate optically anisotropic layer is preferably formed of a composition containing a discotic liquid crystal compound or a composition containing a rod-like liquid crystal compound and a chiral agent.

As the composition comprising a liquid crystal compound, a curable liquid crystal composition is preferred, which has advantages, for example, that changes caused by temperature or humidity can be reduced as the composition is cured by a polymerization to be a layer. Therefore, the composition preferably includes a polymerizable component such as a compound having a reactive group. The liquid crystal compound per se may be polymerizable, or other polymerizable monomer may be included in the composition. The liquid crystal compound per se is preferably polymerizable, and the composition preferably contains at least one liquid crystal compound having two or more reactive groups in a single liquid crystal molecule. The liquid crystal composition may be a mixture of two or more compounds, wherein at least one of the compounds preferably has two or more reactive groups.

The liquid crystal compound does not need to have liquid crystallinity in the finally prepared optically anisotropic layer. For example, in the optically anisotropic layer, the liquid crystal compound having at least one reactive group capable of thermal reaction or photo reaction in the composition no longer exhibits liquid crystallinity by polymerizing or crosslinking to form high-molecular weight compound by the reaction under heating or under irradiation of light.

Examples of the liquid crystal compound for forming a positive uniaxial optically anisotropic layer include azomethine compounds, azoxy compounds, cyanobiphenyl compounds, cyanophenyl esters, benzoate esters, cyclohexanecarboxylic acid phenyl esters, cyanophenylcyclohexane compounds, cyano-substituted phenylpyrimidine compounds, alkoxy-substituted phenylpyrimidine compounds, phenyldioxane compounds, tolan compounds and alkenylcyclohexylbenzonitrile compounds.

Further, the rod-like liquid crystal compounds represented by the following formula (I) are particularly preferably used. In formula (I), Q¹ and Q² respectively represent a reactive group. L¹, L², L³ and L⁴ respectively represent a single bond or a divalent linking group, and it is preferred that at least one of L³ and L⁴ represents -O- or -O-CO-O-. A¹ and A² respectively represent a C₂₋₂₀ spacer group. M represents a mesogen group.

Q¹-L¹-A¹-L³-M-L⁴-A²-L²-Q² Formula (I)

The liquid crystal compound represented by the following formula (I) which is for forming a positive uniaxial optically anisotropic layer will be explained in more detail.

In formula (I), Q¹ and Q² respectively represent a reactive group. The polymerization reaction of the reactive group is preferably addition polymerization (including ring opening polymerization) or condensation polymerization. In other words, the reactive group is preferably a functional group capable of addition polymerization reaction or condensation polymerization reaction. Examples of reactive groups are shown below.

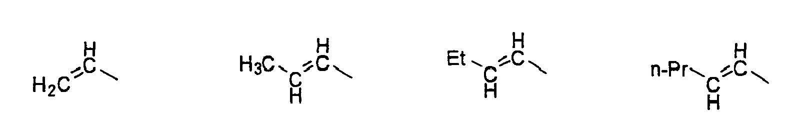

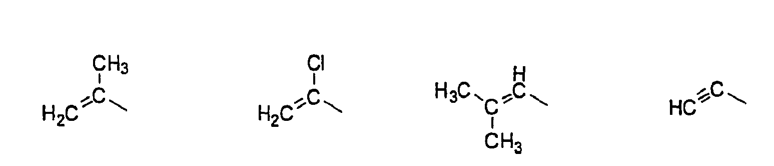

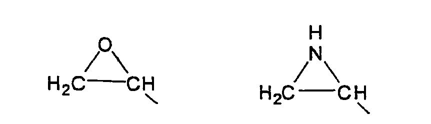

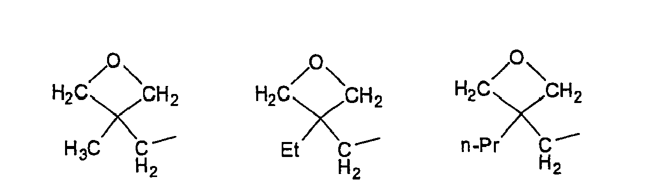

-SH -OH -NH₂

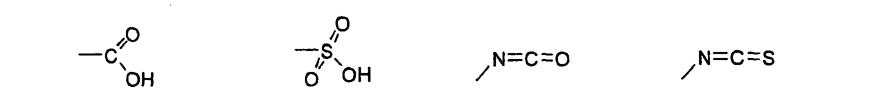

L¹, L², L³ and L⁴ independently represent a divalent linking group, and preferably represent a divalent linking group selected from the group consisting of -O-, -S-, -CO-, -NR²-, -CO-O-, -0-CO-O-, -CO-NR²-, -NR²-CO-, -O-CO-, -O-CO-NR²-, -NR²-CO-O- and -NR²-CO-NR²-. R² represents a C₁₋₇ alkyl group or a hydrogen atom. It is preferred that at least one of L³ and L⁴ represents -O-CO-O-(carbonate group). Q¹-L¹ and Q²-L²- is preferably CH₂=CH-CO-O-, CH₂=C(CH₃)-CO-O- or CH₂=C(Cl)-CO-O-CO-O- more preferably CH₂=CH-CO-O-.

In the formula, A¹ and A² preferably represent a C₂₋₂₀ spacer group. It is more preferred that they respectively represent a C₂₋₁₂ alkylene group, a C₂₋₁₂ alkenylene group or C₂₋₁₂ alkynylene group and much more preferred that they respectively represent a C₂₋₁₂ alkylene group. The spacer group is preferably selected from chain groups and may contain at least one unadjacent oxygen or sulfur atom. And the spacer group may have at least one substituent such as a halogen atom (fluorine, chlorine or bromine atom), cyano group, methyl group and ethyl group.

Examples of the mesogen represented by M include any known mesogen groups. The mesogen groups represented by formula (II) are preferred.

(-W¹-L⁵)ₙ-W²- Formula (II):

In the formula, W¹ and W² independently represent a divalent cyclic alkylene group, a divalent cyclic alkenylene group, a divalent aryl group or a divalent hetero-cyclic group; and L⁵ represents a single bond or a linking group. Examples of the linking group represented by L⁵ include those exemplified as examples of L¹ to L⁴ in the formula (I) and -CH₂-O- and -O-CH₂-. In the formula, n represents 1, 2 or 3.

Examples of W¹ and W² include 1,4-cyclohexanediyl, 1,4-phenylene, pyrimidine-2,5-diyl, pyridine-2,5-diyl, 1,3,4-thiazole-2,5-diyl, 1,3,4-oxadiazole-2,5-diyl, naphtalene-2,6-diyl, naphtalene-1,5-diyl, thiophen-2,5-diyl, pyridazine-3,6-diyl. 1,4-Cyclohexanediyl has cis-trans structural isomers. Any isomers in a pure form, any mixtures of the isomers may be used. However, the trans isomer is preferred. W¹ and W² may respectively have at least one substituent. Examples the substituent include a halogen atom such as a fluorine, chlorine, bromine or iodine atom; cyano group; a C₁₋₁₀ alkyl group such as methyl, ethyl and propyl; a C₁₋₁₀ alkoxy group such as methoxy and ethoxy; a C₁₋₁₀ acyl group such as formyl and acetyl; a C₂₋₁₀ alkoxycarbonyl group such as methoxy carbonyl and ethoxy carbonyl; a C₂₋₁₀ acyloxy group such as acetyloxy and propionyloxy; nitro group, trifluoromethyl group and difluoromethyl group.

Preferred examples of the basic skeleton of the mesogen group represented by the formula (II) include, but not to be limited to, these described below. The examples may have at least one substituent selected from the above.

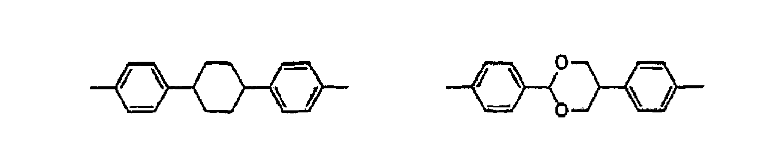

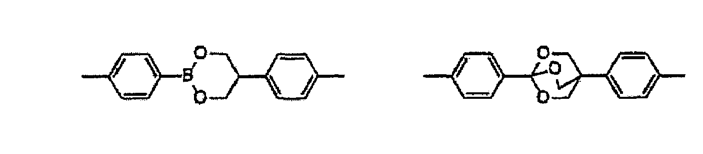

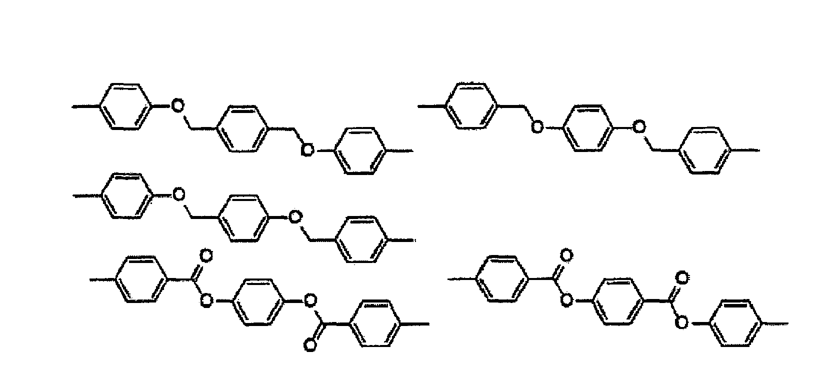

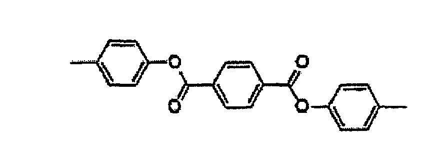

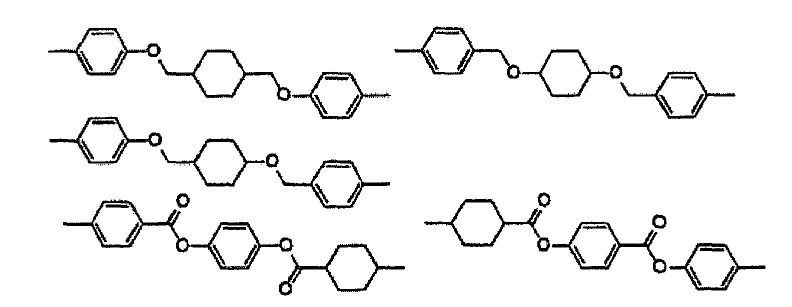

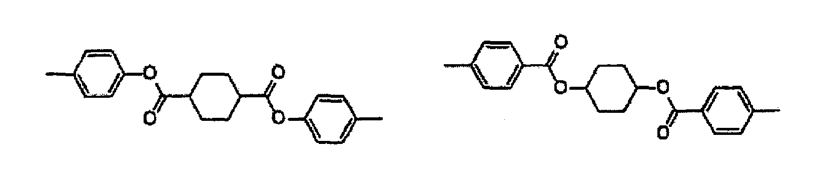

Examples the compound represented by the formula (I) include, but not to be limited to, these described below. The compounds represented by the formula (I) may be prepared according to a method described in a gazette of Tokkohyo No. hei 11-513019 or WO97/00600.

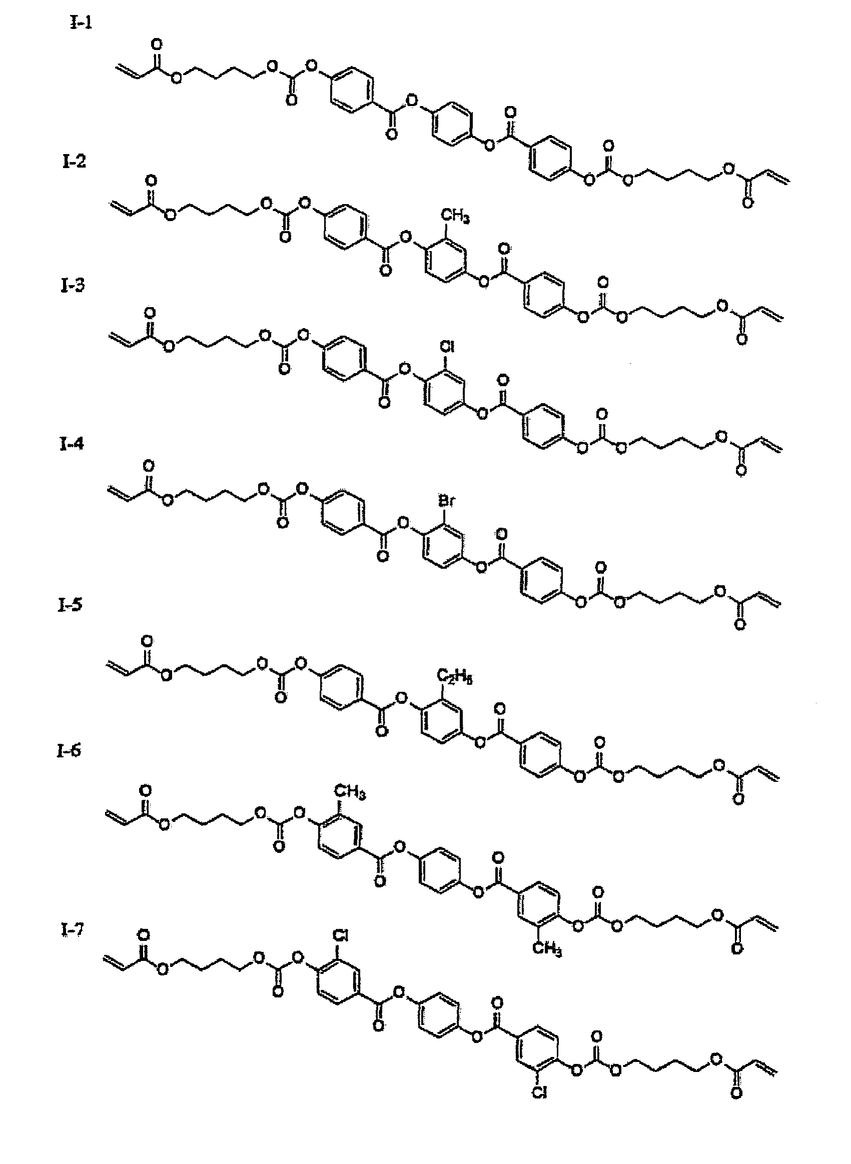

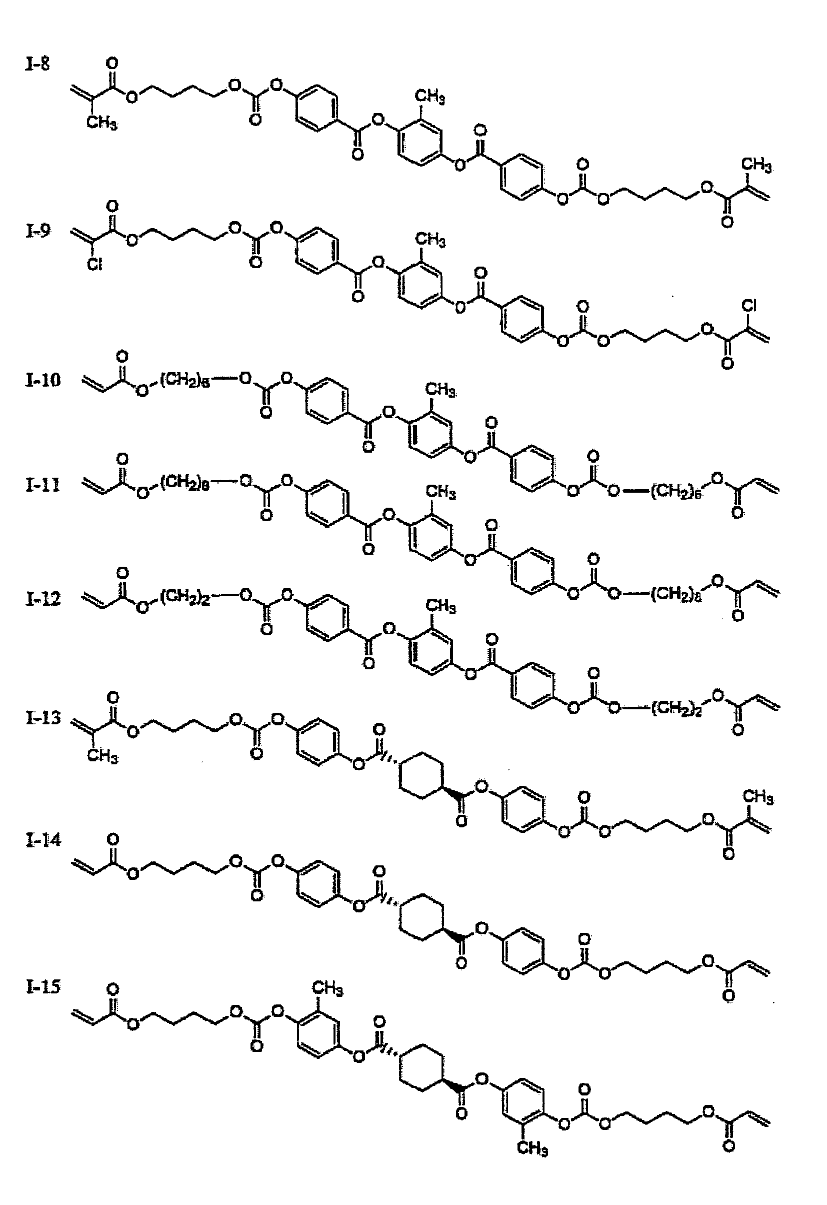

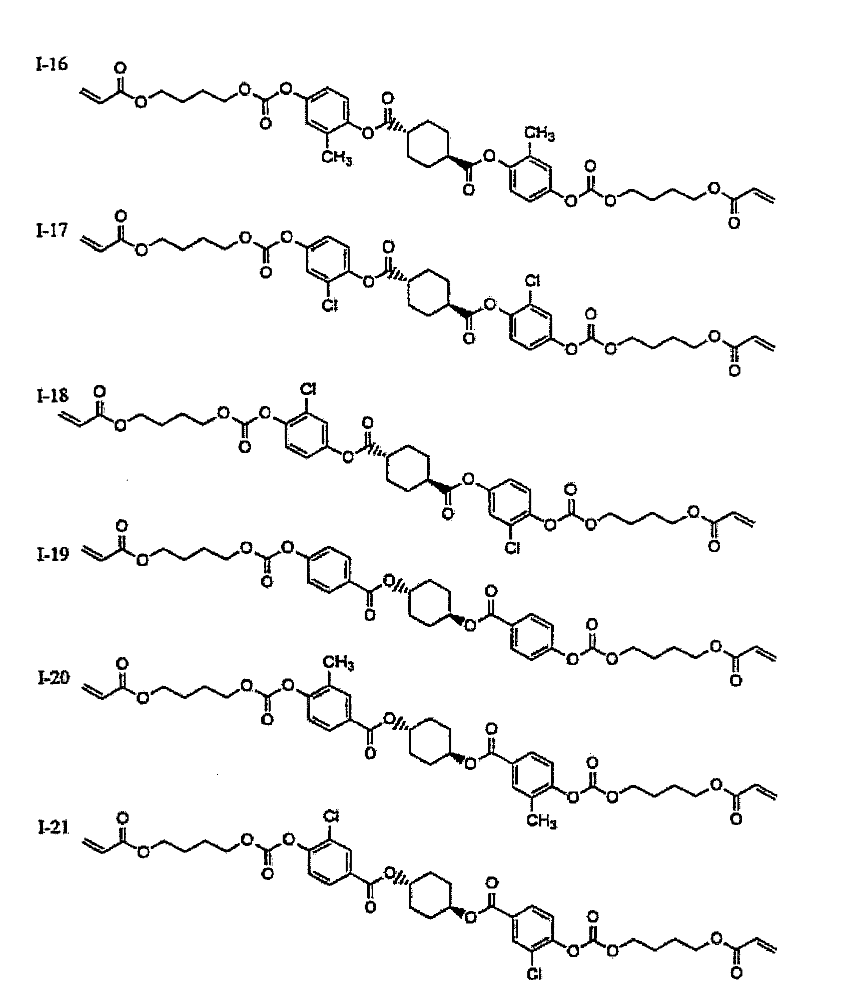

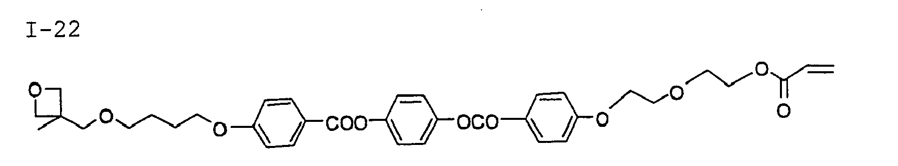

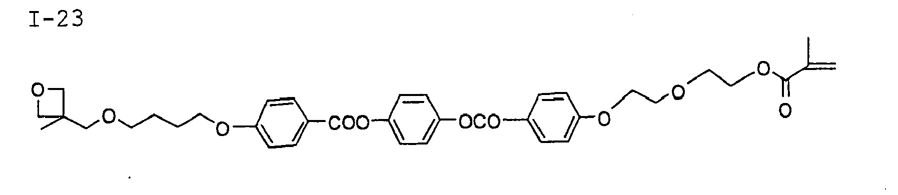

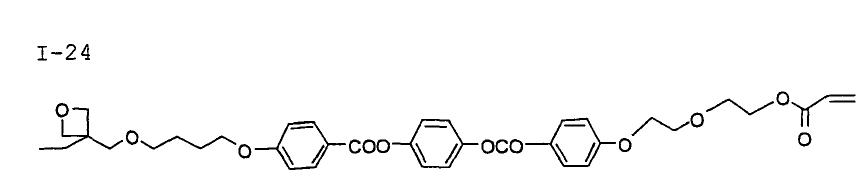

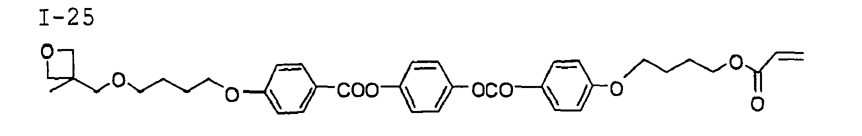

### [Negative Uniaxial Optically Anisotropic Layer]

As a compound for forming a negative uniaxial optically anisotropic layer, examples include a discotic liquid crystal compound, and a polyimide material and a precursor thereof.

As the polyimide material, examples include polyimide, polyisoimide, polyesterimide, polyetherimide, and polyamideimide, and further include polyamide acid, polyamide acid ester, polyamide, polyamine, polythioamide, polyurethane, polyurea, and polyazomethine, all of which have a similar performance to that of the above compounds.

### [Discotic Liquid Crystal Compound]

As the discotic liquid crystal compounds, examples include benzene derivatives described in C. Destrade et al., Mol. Cryst., Vol. 171, p.111 (1981); torxene derivatives described in C. Destrade et al., Mol. Cryst., Vol. 122, p.141 (1985) and Physics Lett., A, Vol. 78, p.82 (1990); cyclohexane derivatives described in B. Kohne et al., Angew. Chem., Vol. 96, p.70 (1984); and azacrown-base or phenylacetylene-base macrocycles described in J. M. Lehn, J. Chem. Commun., p.1794 (1985) and in J. Zhang et al., J. Am. Chem. Soc., Vol. 116, p.2655 (1994). The above mentioned discotic (disk-like) compounds generally have a discotic core in a central portion and groups (L), such as linear alkyl or alkoxy groups or substituted benzoyloxy groups, which radiate from the core, and exhibit liquid crystallinity. When such molecules are aligned uniformly, the aggregate of the aligned molecules may exhibit an optically negative uniaxial property. But the present invention is not limited to these descriptions.

According to the present invention, the discotic liquid crystal compound represented by the following formula (III) is preferably used:

D(-L-P)ₙ Formula (III) :

In the formula, D represents a discotic core, L represents a divalent linking group, P represents a polymerizable group, and n is an integer from 4 to 12.

Preferred examples of the discotic core (D), the divalent linking group (L) and the polymerizable group (P) are respectively (D1) to (D15), (L1) to (L25) and (P1) to (P18) described in Japanese Unexamined Patent Publication (Kokai) No. 2001-4837; and the descriptions in the publication regarding the discotic core (D), the divalent linking group (L) and the polymerizable group (P) are preferably applicable here.

Preferable examples of the above discotic compound include the compounds described in [0045] to [0055] of Japanese Unexamined Patent Publication (Kokai) No. 2007-121986, or WO06/104252.

### [Preparation Method of Negative C-plate Optically Anisotropic Layer]

When a negative c-plate optically anisotropic layer is formed from a composition containing a liquid crystal compound, the negative c-plate optically anisotropic layer can be obtained by applying a composition containing a liquid crystal compound (preferably the aforementioned discotic liquid crystal compound) on a substrate, which may have one or more other layers, maturing and aligning the compound at the temperature forming liquid crystal phase, and then applying heat or irradiating light to the liquid crystal phase for fixation of the alignment without change. For example, when a discotic liquid crystal compound having a polymerizable group is used, homeotropic alignment, wherein the optical axis of the discotic surface of the discotic molecule is perpendicular to the layer surface, can be fixed by UV irradiation or by heating without change in the alignment, thereby generating optical anisotropy.

When a negative c-plate optically anisotropic layer is formed from a polyimide material and a precursor thereof, the negative c-plate optically anisotropic layer can be obtained by applying a composition containing a polyimide material and a precursor thereof on a substrate, which may have one or more other layers, and heating the composition.

### [Preparation Method of Positive A-plate Optically Anisotropic Layer]

The substrate for liquid crystal display device of the present invention can contribute to improvement of the contrast-viewing angle characteristics by including, together with the negative c-plate optically anisotropic layer, a positive a-plate optically anisotropic layer, when applied to a liquid crystal display device employing VA mode as a liquid crystal orientation mode. When a positive a-plate optically anisotropic layer is formed from a composition containing a liquid crystal compound, the positive a-plate optically anisotropic layer can be generally obtained by applying a composition containing a liquid crystal compound on a substrate, which may have one or more other layers, maturing and aligning the compound at the temperature forming liquid crystal phase, and then applying heat or irradiating light to the liquid crystal phase for fixation of the alignment without change.

The positive a-plate optically anisotropic layer is preferably formed on the negative c-plate optically anisotropic layer, while the negative c-plate optically anisotropic layer may be formed on the positive a-plate optically anisotropic layer.

A material that has a function of an alignment layer is preferably used for the negative c-plate optically anisotropic layer, on which a positive a-plate optically anisotropic layer is preferably formed after conducting rubbing treatment on the surface of the negative c-plate optically anisotropic layer. [Horizontal Orientation Agent]

At least one compound selected from the group consisting of the compounds represented by formula (1), (2) and (3) described in paragraphs [0068] to [0072] of Japanese Unexamined Patent Publication (KOKAI) No. 2007-121986 or WO06/104252, may be added to the composition containing liquid crystal compound, in order to substantially align the liquid crystal molecules horizontally. In the specification, the term "horizontal alignment" means that, regarding rod-like liquid crystal molecules, the molecular long axes thereof and a layer plane are parallel to each other, and, regarding discotic liquid crystal molecules, the disk-planes of the cores thereof and a layer plane are parallel to each other. However, they are not required to be exactly parallel to each other, and, in the specification, the term "horizontal alignment" should be understood as an alignment state in which molecules are aligned with a tilt angle against a layer plane less than 10 degree. The tilt angle is preferably from 0 to 5 degree, more preferably 0 to 3 degree, much more preferably from 0 to 2 degree, and most preferably from 0 to 1 degree.

The amount of the compounds represented by formula (1), (2) and (3) is preferably from 0.01 to 20 weight %, more preferably from 0.01 to 10 weight % and much more preferably from 0.02 to 1 weight % on the basis of the weight of the liquid crystal compounds to be used. The compounds represented by the aforementioned general formula (1) to (3) may be used singly, or two or more types of them may be used in combination.

### [Solvent Used for Preparing the Coating Liquid]

The optically anisotropic layer may be preferably formed by directly applying a coating liquid, containing a liquid crystal compound and, if necessary, a polymerization initiator as described below or other additives, to the other layer such as an alignment layer as described below. The solvent used for preparing the coating liquid is preferably an organic solvent. Examples of the organic solvent include amides (e.g., N,N-dimethyl formamide), sulfoxides (e.g., dimethyl sulfoxide), heterocyclic compounds (e.g., pyridine), hydrocarbons (e.g., benzene, hexane), alkylhalides (e.g., chloroform, dichloromethane), esters (e.g., methyl acetate, butyl acetate), ketones (e.g., acetone, methyl ethyl ketone) and ethers (e.g., tetrahydrofuran, 1,2-dimethoxyethane). Alkyl halides and ketones are preferred. Two or more organic solvents may be used in combination.

### [Polymerization Initiator]

The optically anisotropic layer is preferably a layer prepared by applying a composition containing a liquid crystal compound (the coating liquid, for example) on the surface of other layer such as an alignment layer as described below, aligning the compound in a state that shows a desired liquid crystal phase, and then applying heat or irradiating light to the liquid crystal phase for fixation of the alignment. The fixation is preferably performed by a polymerization reaction of the reactive group in the liquid crystal compound.

The polymerization reaction includes thermal polymerization reaction using a thermal polymerization initiator and photo-polymerization reaction using a photo-polymerization initiator. Photo-polymerization reaction is preferred. Examples of photo-polymerization initiators include alpha-carbonyl compounds (described in US Patents Nos. 2,367,661 and 2,367,670), acyloin ethers (described in US Patent No. 2,448,828), alpha-hydrocarbon-substituted aromatic acyloin compounds (described in US Patent No. 2,722,512), polynuclear quinone compounds (described in US Patents Nos. 3,046,127 and 2,951,758), combinations of triarylimidazole dimers and p-aminophenyl ketone (described in US Patent No. 3,549,367), acridine and phenazine compounds (described in Japanese Laid-Open Patent Publication (Tokkai) syo No. 60-105667 and US Patent No. 4,239,850) and oxadiazole compounds (described in US Patent No. 4,212,970).

Examples of photo-polymerization initiators further include cationic-polymerization initiators such as organic sulfonium salts, iodonium salts, and phosphonium salts. As a counter ion of these compounds, an antimonate, a phosphate, or the like is preferably used.

The amount of the photo-polymerization initiators to be used is preferably 0.01 to 20 % by weight, more preferably 0.5 to 5 % by weight on the basis of solids in the coating liquid. Irradiation for polymerizing the liquid crystal molecules preferably uses UV rays. The irradiation energy is preferably 20 mJ/cm² to 10 J/cm², and more preferably 100 to 800 mJ/cm². Irradiation may be carried out in an atmosphere of inert gas such as nitrogen gas and/or under heating to facilitate the photo-polymerization reaction.

### [Post-Treatment of Optically Anisotropic Layer]

Various post-treatment may be conducted to modify the optically anisotropic layer produced. Examples of the post treatment include corona treatment for improving adhesiveness, addition of a plasticizer for improving plasticity, addition of a heat polymerization prohibiting agent for improving storage stability, and coupling treatment for improving reactivity. When the polymer in the optically anisotropic layer have a unreacted reactive group, addition of a polymerization initiator suited to the reactive group may also be a useful modification method. For example, by addition of a radical photopolymerization initiator to an optically anisotropic layer fixed by polymerization of a liquid crystal compound having a cationically reactive group and a radically reactive group by using a cationic photopolymerization initiator, the reaction of the unreacted radically reactive group in the patterned light-exposure afterward can be promoted. As the method of addition of the plasticizer or the photopolymerization initiator, examples include immersing an optically anisotropic layer in the solution of the desired additive, and applying the solution of the desired additive to the optically anisotropic layer for the permeance of the solution. Further, when another layer is applied to the optically anisotropic layer, an additive may be added to the coating solution of the layer for permeance to the optically anisotropic layer.

### [Alignment Layer]

An alignment layer may be used for forming the optically anisotropic layer. The alignment layer has ability of controlling the alignment of liquid crystal molecules thereon, and, as far as having such ability, may be selected from various known alignment layers. Preferable examples of the alignment layer include a rubbed layer of an organic compound (preferably a polymer), an oblique vapor deposited layer of an inorganic compound, a layer with microgrooves, a layer of deposition of an organic compound (for example, omega-tricosanoic acid, dioctadecylmethylammonium chloride, and methyl stearate) by the Langmuir-Blodgett (LB) film method, and a layer imparted with orientation functions by exposure to an electric or magnetic field.

Examples of the organic compound, which can be used for forming the alignment layer, include polymers such as polymethyl methacrylate, acrylic acid /methacrylic acid copolymer, styrene/maleimide copolymer, polyvinyl alcohol, poly(N-methyrol acrylamide), styrene/vinyl toluene copolymer, chlorosulfonated polyethylene, nitrocellulose, polyvinyl chloride, chlorinated polyolefin, polyester, polyimide, vinyl acetate/ vinyl chloride copolymer, ethylene/vinyl acetate copolymer, carboxymethyl cellulose, polyethylene, polypropylene and polycarbonates; and silane coupling agents. Preferred exampled of the polymer include polyimide, polystyrene, styrene based polymers, gelatin, polyvinyl alcohol and alkyl-modified polyvinyl alcohol having at least one alkyl group (preferably C₆ or longer alkyl group).

For production of an alignment layer, a polymer may preferably used. The types of polymer, which is used for forming the alignment layer, may be decided depending on what types of alignment state of liquid crystal (in particular how large of tilt angle) is preferred. For forming an alignment layer capable of aligning liquid crystal molecules horizontally, it is required not to lower the surface energy of the alignment layer, and polymer may be selected from typical polymers have been used for alignment layers. Examples of such polymer are described in various documents concerning liquid crystal cells or optical compensation sheets. Polyvinyl alcohols, modified polyvinyl alcohols, poly acrylic acid, acrylic acid/acrylate copolymers, polyvinyl pyrrolidone, cellulose and modified cellulose are preferably used. Materials used for producing the alignment layer may have at least one functional group capable of reacting with the reactive group of liquid crystal compound in the optically anisotropic layer. Examples of the polymer having such a functional group include polymers having side chains comprising a repeating unit having such functional group, and polymers having a cyclic moiety substituted with such a functional group. It is more preferable to use an alignment layer capable of forming a chemical bond with the liquid crystal compound at the interface, and a particularly preferable example of such alignment layer is a modified polyvinyl alcohol, described in Japanese Laid-Open Patent Publication "Tokkaihei" No. 9-152509, which has an acrylic group introduced in the side chain thereof using acid chloride or Karenz MOI (product of Showa Denko K.K.). The thickness of the alignment layer is preferably 0.01 to 5 µm, and more preferably 0.05 to 2 µm. An alignment layer may also have a function as a layer for oxygen shut-off.

Polyimide, preferably fluorine-containing polyimide, films, which have been used as an alignment layer for LCD, are also preferable. The film may be formed by applying poly(amic acid), provided, for example, as LQ/LX series products by Hitachi Chemical Co., Ltd or as SE series products by NISSAN CHEMICAL INDUSTRIES, LTD, to a surface of the support, heating at 100 to 300 °C for 0.5 to one hour to form a polymer layer, and rubbing a surface of the polymer layer.

As described above, the negative c-plate optically anisotropic layer may be used as an alignment layer for the liquid crystal compound for forming the positive a-plate optically anisotropic layer.

The rubbing treatment may be carried out with known techniques which have been employed in the usual step for aligning liquid crystal molecules of LCD. In particular, the rubbing treatment may be carried out by rubbing a surface of a polymer layer in a constant direction with paper, gauze, felt, rubber, nylon or polyester fiber or the like. The rubbing treatment may be generally carried out by rubbing a surface of a polymer layer in one direction several times with a cloth having fibers of the same length and diameter grafted uniformly.

Examples of the material used in oblique vapor deposition include metal oxides such as SiO₂, which is a typical material, TiO₂ and ZnO₂; fluorides such as MgF₂; metals such as Au and Al. Any high dielectric constant metal oxides can be used in oblique vapor deposition, and, thus, the examples thereof are not limited to the above mentioned materials. The inorganic oblique deposition film may be produced with a deposition apparatus.

The optically anisotropic layer may be transferred by using adhesive on a transparent support after a liquid crystal compound is aligned on a temporary alignment layer and the alignment is fixed. However, the optically anisotropic layer is preferably formed directly without transferring process from the viewpoint of productivity.

### [Color Filter Layer]

The color filter layer contains a black matrix and a colored layer. The colored layer may contain, for example, red colored layer (R), green colored layer (G), blue colored layer (B). The color filter layer used for the substrate for liquid crystal display device of the present invention may be formed by suitably selecting a conventionally known method.

### EXAMPLES

The present invention is described in greater detail below through examples. The materials, reagents, weight quantities, proportions, operations, and the like that are given in the Examples below can be suitably modified without departing from the spirit of the present invention. Accordingly, the scope of the present invention is not limited to the specific examples given below.

### (Preparation of coating liquid C-1 for optically anisotropic layer)

The composition recorded below was prepared and filtered through a polypropylene filter having a pore size of 0.2µm to obtain coating liquid C-1 for optically anisotropic layer.

C-1-1 was synthesized according to the method described in Japanese Unexamined Patent Publication (KOKAI) No. 2001-166147.

C-1-2 was synthesized according to the method described in Tetrahedron Lett., Vol. 43, p.6793(2002).

| Composition of coating liquid C-1 for optically anisotropic layer (weight %) | |
|---|---|
| Discotic liquid crystal compound (C-1-1) | 30.0 |
| Ethylene oxide-modified trimethylol propane triacrylate (V#360, from Osaka Organic Chemical Industry, Ltd.) | 3.3 |
| Optical photopolymerization initiator (Irgacure 907, made by Ciba Specialty Chemicals) Sensitizing agent | 1.0 |
| (Kayacure DETX, made by Nippon Kayaku Co., Ltd.) | 0.33 |
| Horizontal orientation agent (C-1-2) | 0.27 |
| Methyl ethyl ketone | 65.1 |

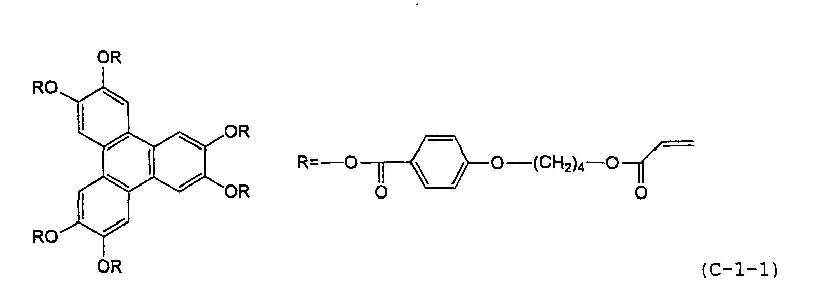

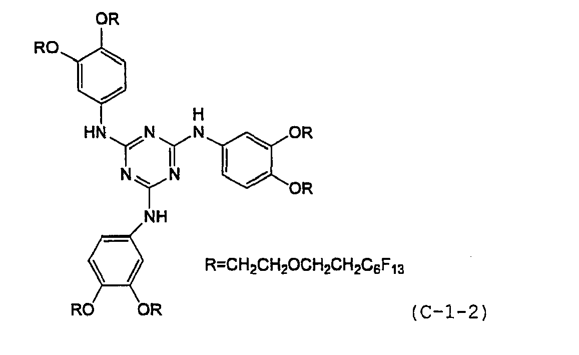

### (Preparation of coating liquid C-2 for optically anisotropic layer)

The composition recorded below was prepared and filtered through a polypropylene filter having a pore size of 0.2µm to obtain coating liquid C-2 for optically anisotropic layer.

| Composition of coating liquid C-2 for optically anisotropic layer (weight %) | |
|---|---|
| Polyimide (C-2-1) | 10.00 |
| Methyl ethyl ketone | 90.00 |

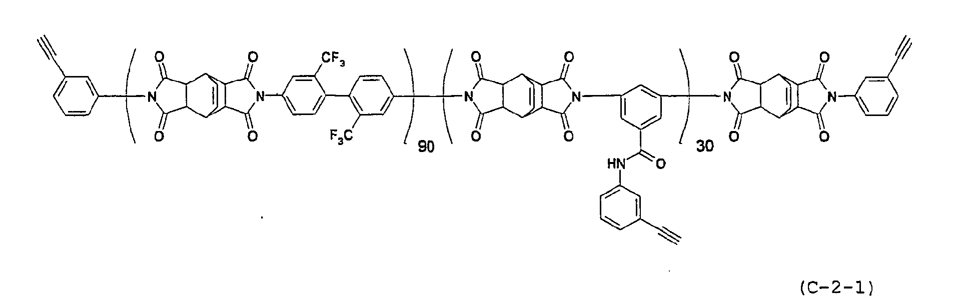

### (Preparation of coating liquid C-3 for optically anisotropic layer)

Under dried nitrogen gas flow, trans-1,4-diaminocyclohexane (10.96 g) and bis(3-aminopropyl) tetramethyldisiloxane (0.99 g) were dissolved in N-methyl-2-pyrrolidone (177.28 g). Subsequently, the solution was added with 3, 3', 4, 4'-biphenyltetracarbonic dianhydride (28.25 g) and N-methyl-2-pyrrolidone (40.00 g) and stirred at 60°C for 3 hours. Further, the solution was added with phthalic anhydride (1.18 g) and stirred at 60°C for 3 hours to obtain a clear viscous polyamic acid solution. The solution was filtered through a polypropylene filter having a pore size of 0.2µm to obtain coating liquid C-3 for optically anisotropic layer.

### (Preparation of coating liquid A-1 for optically anisotropic layer)

The composition recorded below was prepared and filtered through a polypropylene filter having a pore size of 0.2µm to obtain coating liquid A-1 for optically anisotropic layer.

A-1-1 was synthesized according to the method described in WO93/22397.

| Composition of coating liquid A-1 for optically anisotropic layer (weight %) | |
|---|---|
| Rod-like liquid crystal (A-1-1) | 31.93 |
| Horizontal orientation agent (C-1-2) Radical photopolymerization initiator | 0.07 |
| (Irgacure 907, made by Ciba Specialty Chemicals) Photopolymerization promoter | 1.00 |
| (Kayacure DETX-S, made by Nippon Kayaku Co., Ltd.) | 0.33 |
| Methyl ethyl ketone | 66.67 |

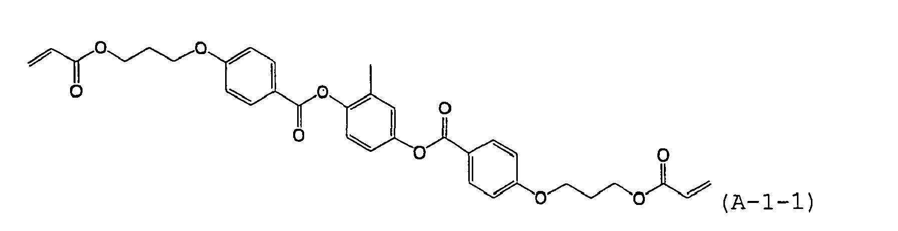

### (Preparation of coating liquid A-2 for optically anisotropic layer)

The composition recorded below was prepared and filtered through a polypropylene filter having a pore size of 0.2µm to obtain coating liquid A-2 for optically anisotropic layer.

A-2-1 was synthesized according to the method described in Japanese Unexamined Patent Publication (KOKAI) No. 2004-123882.

| Composition of coating liquid A-2 for optically anisotropic layer (weight %) | |
|---|---|
| Rod-like liquid crystal (A-2-1) | 19.57 |
| Horizontal orientation agent (C-1-2) Cationic photopolymerization initiator | 0.01 |
| (Cyracure UVI6974 from Dow Chemical Company) Polymerization control agent (IRGANOX1076, | 0.40 |
| Chiba Speciality Chemicals Co., Ltd.) | 0.02 |
| Methyl ethyl ketone | 80.00 |

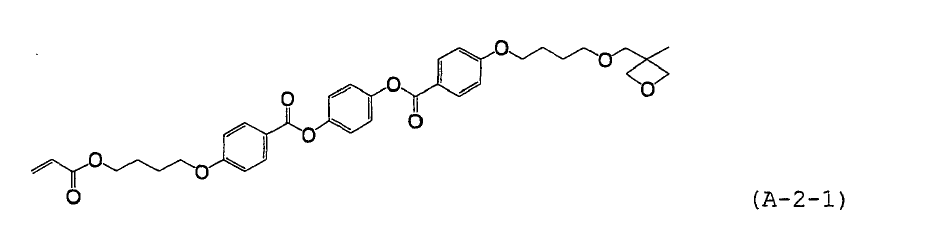

### (Preparation of Coating Liquid W-1 for Photosensitive Polymer Layer)

The composition below was prepared, filtered through a polypropylene filter having a pore size of 0.2µm, and the filtrate was used as coating liquid W-1 for photosensitive polymer layer.

| Composition of Coating Liquid W-1 for forming | |
|---|---|
| Photosensitive Polymer Layer | (% by weight) |
| Random copolymer of benzyl methacrylate/methacrylic acid/methyl methacrylate (copolymerization ratio (molar ratio)= 35.9/22.4/41.7, weight-average molecular weight=38,000) | 8.05 |
| KAYARAD DPHA (from Nippon Kayaku Co., Ltd.) Radical polymerization initiator | 4.83 |
| (2-trichloromethyl-5-(p-styrylstyryl)-1,3,4-oxadiazole) | 0.12 |
| Hydroquinone monomethyl ether | 0.002 |
| Megafac F-176-PF (from Dainippon Ink and Chemicals, Inc.) | 0.05 |
| Propylene glycol monomethyl ether acetate | 34.80 |
| Methyl ethyl ketone | 50.538 |
| Methanol | 1.61 |

### (Preparation of Coating Liquid K-1 for photosensitive polymer Layer)

Coating liquid K-1 for the photosensitive polymer layer was obtained first by weighing K pigment dispersion and propyleneglycol monomethy ether acetate listed in Table 1 according to the amounts listed therein, mixing them at 24°C (±2°C), stirring the mixture at 150 rpm for 10 minutes, then weighing methyl ethyl ketone, random copolymer of benzyl methacrylate/methacrylic acid(molar ratio)= 78/22 (weight-average molecular weight=40,000), hydroquinone monomethyl ether, DPHA, 2- (trichloromethyl)-5-(p-styrylstyryl) -1,3,4-oxadiazole, and Megafac F-176PF according to the amounts listed in Table 1, adding them in this order at 25°C (±2°C), and stirring the mixture at 40°C (±2°C) at 150 rpm for 30 minutes.

**Table 1**

| (% by weight) | K-1 |
|---|---|
| K pigment dispersion | 25 |
| propylene glycol monomethyl ether acetate (PGMEA) | 15.578 |
| methyl ethyl ketone | 53.494 |
| random copolymer of benzyl methacrylate/methacrylic acid (molar ratio)= 78/22(weight-average molecular weight=40,000) | 2.43 |
| DPHA | 3.192 |
| 2-trichloromethyl-5-(p-styrylstyryl)-1,3,4-oxadiazole | 0.160 |
| hydroquinone monomethyl ether | 0.002 |
| Megafac F-176PF (from Dainippon Ink and Chemicals, Inc.) | 0.044 |

### Compositions listed in Table 1 are as follows.

**[Composition of K Pigment Dispersion]**

| Composition of K Pigment Dispersion (%) | |
|---|---|
| Carbon black (Special Black 250, from Degussa) | 13.1 |
| 5-[3-Oxo-2-[4-[3,5-bis(3-diethyl aminopropyl aminocarbonyl)phenyl]aminocarbonyl]phenylazo]-butyroylaminobenzimidazolone | 0.65 |
| Random copolymer of benzyl methacrylate/methacrylic acid (72/28 by molar ratio, weight-average molecular weight=37,000) | 6.72 |
| Propylene glycol monomethyl ether acetate | 79.53 |

### <Example 1>

### <Preparation of negative c-plate substrate 1>

A non-alkali glass substrate was washed with a rotating brush having nylon bristles while spraying for 20 seconds a glass cleaning solution adjusted to 25°C, washed with a spray of pure water, and heated with a substrate preheating device for 2 minutes at 100°C. Subsequently, on the substrate coating liquid C-1 for optically anisotropic layer was applied by spin coating, and the coating was dried with heating and matured for 3 minutes at a film surface temperature of 125°C to obtain a uniform liquid crystal phase. The coating was then irradiated with UV radiation in air with a 160 W/cm air-cooled metal halide lamp (made by Eye Graphics Co., Ltd.) at a power density of 400 mW/cm² and a dose of 300 mJ/cm² to fix the orientation, yielding negative c-plate substrate 1.

### <Preparation of negative c-plate substrate 2>

Negative c-plate substrate 2 with film thickness of 6.5 µm was prepared in a similar manner to that of negative c-plate substrate 1 except that coating liquid C-2 for optically anisotropic layer was used instead of coating liquid C-1 for optically anisotropic layer and the substrate was baked after the coating and drying at 230°C for one hour.

### <Preparation of negative c-plate substrate 3>

Negative c-plate substrate 3 with film thickness of 2.0 µm was prepared in a similar manner to that of negative c-plate substrate 1 except that coating liquid C-3 for optically anisotropic layer was used instead of coating liquid C-1 for optically anisotropic layer, the coating was dried for 20 minutes at a film surface temperature of 120°C, and then the substrate was baked at 240°C for 30 minutes.

### <Example 2>

### <Formation of positive a-plate layer 1>

On negative c-plate substrate 1, a coating solution for alignment layer (RN-1199A, made by Nissan Chemical Industries, Ltd.) was applied and dried, and the substrate was baked for 1 hour at 220°C, and the obtained alignment layer was subjected to a rubbing process. The film thickness of the alignment layer was 60 nm. On the alignment layer coating liquid A-1 for optically anisotropic layer was applied, and the coating was dried for 2 minutes at a film surface temperature of 105°C to obtain a liquid crystal phase. The coating was then irradiated with UV radiation in air with a 160 W/cm air-cooled metal halide lamp (made by Eye Graphics Co., Ltd.) at a power density of 400 mW/cm² and a dose of 300 mJ/cm² to fix the orientation, obtaining a positive a-plate layer 1 of film thickness 1.2µm.

### <Formation of positive a-plate layer 2>

To a rubbed surface of negative c-plate substrate 2 coating liquid A-2 for optically anisotropic layer was applied, and the coating was dried for. 2 minutes at a film surface temperature of 105°C to obtain a liquid crystal phase. The coating was then irradiated with UV radiation in air with a 160 W/cm air-cooled metal halide lamp (made by Eye Graphics Co., Ltd.) at a power density of 240 mW/cm² and a dose of 600 mJ/cm² to fix the orientation, yielding an optically anisotropic layer of 1.8µm in thickness. On the layer, coating liquid W-1 for photosensitive polymer layer was applied and dried to obtain a photosensitive polymer layer of 1.0µm in thickness.

The photosensitive polymer layer was then subjected to light exposure in a pattern-making manner using a proximity-type exposure apparatus having an extra-high-voltage mercury lamp (product of Hitachi Electronics Engineering Co., Ltd.), wherein the substrate and a mask (quartz-made photomask having an image pattern formed thereon) were vertically held while keeping a distance between the surface of the photomask and the photosensitive polymer layer of 200 µm away from each other, under an exposure energy of 25 mJ/cm² for R region, 22 mJ/cm² for G region, and 16 mJ/cm² for B region. The substrate was baked in a muffle furnace at 230°C for one hour to obtain positive a-plate layer 2 having a retardation pattern.

### <Formation of positive a-plate layer 3>

To a rubbed surface of negative c-plate substrate 3 coating liquid A-2 for optically anisotropic layer was applied, and the coating was dried for 2 minutes at a film surface temperature of 105°C to obtain a liquid crystal phase. The coating was then irradiated with UV radiation in air with a 160 W/cm air-cooled metal halide lamp (made by Eye Graphics Co., Ltd.) at a power density of 240 mW/cm² and a dose of 600 mJ/cm² to fix the orientation, yielding an optically anisotropic layer of 1.8µm in thickness. On the layer, coating liquid K-1 for photosensitive polymer layer was applied and dried to obtain a photosensitive polymer layer of 2.0µm in thickness.

The photosensitive polymer layer was then subjected to light exposure in a pattern-making manner using a proximity-type exposure apparatus having an extra-high-voltage mercury lamp (product of Hitachi Electronics Engineering Co., Ltd.), wherein the substrate and a mask (quartz-made photomask having an image pattern formed thereon) were vertically held while keeping a distance between the surface of the photomask and the photosensitive polymer layer of 200 µm away from each other, under an exposure energy of 500 mJ/cm². Thereafter, the photosensitive polymer layer was developed using a shower of a mixture solution of sodium carbonate-base developing solution (containing 0.06 mol/L of sodium hydrogencarbonate, sodium carbonate of the same concentration, 1% of sodium dibutylnaphthalene sulfonate, anionic surfactant, defoaming agent and stabilizer, trade name: T-CD1, product of Fuji Photo Film Co., Ltd.) and 2-propanol under a conical nozzle pressure of 0. 15 MPa, and subjected to a poplyester brushing treatment to thereby obtain black matrix.

The substrate was further subjected to light exposure in a pattern-making manner using a proximity-type exposure apparatus having an extra-high-voltage mercury lamp (product of Hitachi Electronics Engineering Co., Ltd.), wherein the substrate and a mask (quartz-made photomask having an image pattern formed thereon) were vertically held while keeping a distance between the surface of the photomask and the photosensitive polymer layer of 200 µm away from each other, under an exposure energy of 63 mJ/cm² for R region, 55 mJ/cm² for G region, and 40 mJ/cm² for B region. The substrate was baked at 230°C for one hour to obtain a positive a-plate layer 3 having a retardation pattern.

### <Example 3>

### <Formation of substrate for retardation measurement 1>

Substrate for retardation measurement 1 was prepared in a similar manner to that of positive a-plate substrate 1 except that a non-alkali glass substrate which was washed with a rotating brush having nylon bristles while spraying for 20 seconds a glass cleaning solution adjusted to 25°C, washed with a spray of pure water, and heated with a substrate preheating device for 2 minutes at 100°C was used instead of negative c-plate substrate 1.

### <Formation of substrate for retardation measurement 2-R>

A non-alkali glass substrate was washed with a rotating brush having nylon bristles while spraying for 20 seconds a glass cleaning solution adjusted to 25°C, washed with a spray of pure water, and heated with a substrate preheating device for 2 minutes at 100°C. On the substrate, a coating solution for an alignment layer (RN-1199A, made by Nissan Chemical Industries, Ltd.) was applied and dried, and the substrate was baked for one hour at 220°C, and the obtained alignment layer was subjected to a rubbing process. The film thickness of the alignment layer was 60 nm.

On the alignment layer coating liquid A-2 for optically anisotropic layer was applied, and the coating was dried for 2 minutes at a film surface temperature of 105°C to obtain a liquid crystal phase. The coating was then irradiated with UV radiation in air with a 160 W/cm air-cooled metal halide lamp (made by Eye Graphics Co., Ltd.) at a power density of 240 mW/cm² and a dose of 600 mJ/cm² to fix the orientation, yielding an optically anisotropic layer of 1.8µm in thickness. On the layer, coating liquid W-1 for photosensitive polymer layer was applied and dried to obtain photosensitive polymer layer of 1.0µm in thickness.

The photosensitive polymer layer was then subjected to light exposure using a proximity-type exposure apparatus having an extra-high-voltage mercury lamp (product of Hitachi Electronics Engineering Co., Ltd.) under exposure energy of 25 mJ/cm² in whole area. The substrate was baked in a muffle furnace at 230°C for one hour to obtain substrate for retardation measurement 2-R.

### <Formation of substrate for retardation measurement 2-G>

Substrate for retardation measurement 2-G was prepared in a similar manner to that of substrate for retardation measurement 2-R except that exposure energy of 22 mJ/cm² was used for the light exposure in whole area.

### <Formation of substrate for retardation measurement 2-B>

Substrate for retardation measurement 2-B was prepared in a similar manner to that of substrate for retardation measurement 2-R except that exposure energy of 16 mJ/cm² was used for the light exposure in whole area.

### <Formation of substrate for retardation measurement 3-R>

A non-alkali glass substrate was washed with a rotating brush having nylon bristles while spraying for 20 seconds a glass cleaning solution adjusted to 25°C, washed with a spray of pure water, and heated with a substrate preheating device for 2 minutes at 100°C. On the substrate, a coating solution for an alignment layer (RN-1199A, made by Nissan Chemical Industries, Ltd.) was applied and dried, and the substrate was baked for one hour at 220°C, and the obtained alignment layer was subjected to a rubbing process. The film thickness of the alignment layer was 60 nm.

On the alignment layer coating liquid A-2 for optically anisotropic layer was applied, and the coating was dried for 2 minutes at a film surface temperature of 105°C to obtain a liquid crystal phase. The coating was then irradiated with UV radiation in air with a 160 W/cm air-cooled metal halide lamp (made by Eye Graphics Co., Ltd.) at a power density of 240 mW/cm² and a dose of 600 mJ/cm² to fix the orientation, yielding an optically anisotropic layer of 1.8µm in thickness. On the layer, coating liquid K-1 for photosensitive polymer layer was applied and dried to obtain photosensitive polymer layer of 2.0µm in thickness.

Thereafter, the photosensitive polymer layer was developed using a shower of a mixture solution of sodium carbonate-base developing solution (containing 0.06 mol/L of sodium hydrogencarbonate, sodium carbonate of the same concentration, 1% of sodium dibutylnaphthalene sulfonate, anionic surfactant, defoaming agent and stabilizer, trade name: T-CD1, product of Fuji Photo Film Co., Ltd.) and 2-propanol under a conical nozzle pressure of 0.15 MPa, and subjected to a polyester brushing treatment.

The substrate was further subjected to light exposure using a proximity-type exposure apparatus having an extra-high-voltage mercury lamp (product of Hitachi Electronics Engineering Co., Ltd.) under exposure energy of 63 mJ/cm² in whole area. The substrate was baked in a muffle furnace at 230°C for one hour to obtain substrate for retardation measurement 3-R.

### <Formation of substrate for retardation measurement 3-G>

Substrate for retardation measurement 3-G was prepared in a similar manner to that of substrate for retardation measurement 3-R except that exposure energy of 55 mJ/cm² was used for the light exposure in whole area.

### <Formation of substrate for retardation measurement 3-B>

Substrate for retardation measurement 3-B was prepared in a similar manner to that of substrate for retardation measurement 3-R except that exposure energy of 40 mJ/cm² was used for the light exposure in whole area.

### (Retardation measurement)

The front retardation Re (0) and the retardation Re (40) and Re (-40) with the sample inclined by ± 40° with the retardation axis (slow axis) as axis of rotation were measured at a wavelength of 550 nm by the parallel Nicol method employing a fiber spectrometer. The results of retardation measurement of each substrate are given in Table 2.

**Table 2**

| Sample | Re(0) | Re(40) | Re(-40) |
|---|---|---|---|
| Negative c-plate substrate | | | |
| 1 | 0.0 | 32.2 | 31.6 |
| 2 | 0.0 | 32.0 | 31.8 |
| 3 | 0.0 | 31.5 | 32.1 |

| Substrate for retardation measurement | | | |
|---|---|---|---|
| 1 | 135.8 | 132.9 | 122.4 |
| 2-R | 152.0 | 143.0 | 144.6 |
| 2-G | 136.4 | 131.3 | 125.3 |
| 2-B | 110.5 | 103.9 | 103.3 |
| 3-R | 153.0 | 142.4 | 145.2 |
| 3-G | 135.4 | 130.3 | 124.3 |
| 3-B | 110.2 | 103.8 | 103.4 |

### <Example 4>

### (Preparation of color filter substrate 1)

A black matrix and a filter of three (RGB) colors were formed on positive a-plate layer 1 formed on negative c-plate substrate 1 by using the transfer system (made by Fuji Photo Film Co., Ltd.) described on page 25 of Fujifilm Research & Development No. 44 (1999) to obtain color filter substrate 1.

### (Preparation of color filter substrate 2)

A black matrix and a filter of three (RGB) colors were formed on the positive a-plate layer 2 formed on the negative c-plate substrate 2 by using the transfer system (made by Fuji Photo Film Co. , Ltd.) described on page 25 of Fujifilm Research & Development No. 44 (1999) to obtain color filter substrate 2.

The color filters are adjusted in a manner that R filter is on the R region, G filter on the G region, and B filter on the B region.

### (Preparation of color filter substrate 3)

A color filter of three (RGB) colors was formed on the positive a-plate layer 3 and black matrix formed on negative c-plate substrate 3 by using the transfer system (made by Fuji Photo Film Co., Ltd.) described on page 25 of Fujifilm Research & Development No. 44 (1999) to obtain color filter substrate 32.

The color filters are adjusted in a manner that R filter is on the R region, G filter on the G region, and B filter on the B region.

### (Preparation of color filter substrate 4)

A non-alkali glass substrate was washed with a rotating brush having nylon bristles while spraying for 20 seconds a glass cleaning solution adjusted to 25°C, washed with a spray of pure water, and heated with a substrate preheating device for 2 minutes at 100°C. On the glass substrate, positive a-plate layer 1 and negative c-plate layer (substrate) 1 were formed in a similar manner to the above in this order. On the obtained substrate, black matrix and a color filter of three (RGB) colors were formed by using the transfer system (made by Fuji Photo Film Co., Ltd.) described on page 25 of Fujifilm Research & Development No. 44 (1999) to obtain color filter substrate 4.

### <Comparative Example 1>

### (Preparation of color filter substrate 5)

A color filter substrate having black matrix and a three (RGB) color filter on a glass substrate was prepared using the transfer system (made by Fuji Photo Film Co., Ltd.) described on page 25 of Fujifilm Research & Development No. 44 (1999). On the color filter substrate, negative c-plate layer (substrate) 1 and positive a-plate layer 1 were formed in a similar manner to the above in this order to obtain color filter substrate 5.

### (Preparation of color filter substrate 6)

A color filter substrate having black matrix and a three (RGB) color filter on a glass substrate was prepared by using the transfer system (made by Fuji Photo Film Co., Ltd.) described on page 25 of Fujifilm Research & Development No. 44 (1999). On the color filter substrate, negative c-plate layer (substrate) 2 and positive a-plate layer 2 were formed in a similar manner to the above in this order to obtain color filter substrate 6.

The color filters are adjusted in a manner that R filter is on the R region, G filter on the G region, and B filter on the B region.

### (Preparation of color filter substrate 7)

A color filter substrate having black matrix and a three (RGB) color filter on a glass substrate was prepared using the transfer system (made by Fuji Photo Film Co., Ltd.) described on page 25 of Fujifilm Research & Development No. 44 (1999). On the color filter substrate, negative c-plate layer 3 (substrate) was formed in a similar manner to the above in this order. The negative c-plate layer 3 was then subjected to a rubbing treatment. On the layer, coating liquid A-2 for optically anisotropic layer was applied, and the coating was dried for 2 minutes at a film surface temperature of 105°C to obtain a liquid crystal phase. The coating was then irradiated with UV radiation in air with a 160 W/cm air-cooled metal halide lamp (made by Eye Graphics Co., Ltd.) at a power density of 240 mW/cm² and a dose of 600 mJ/cm² to fix the orientation, yielding an optically anisotropic layer of 1.8µm in thickness. On the layer, coating liquid K-1 for photosensitive polymer layer was applied and dried to obtain a photosensitive polymer layer of 2.0µm in thickness.

Thereafter, the photosensitive polymer layer was developed using a shower of a mixture solution of sodium carbonate-base developing solution (containing 0.06 mol/L of sodium hydrogencarbonate, sodium carbonate of the same concentration, 1% of sodium dibutylnaphthalene sulfonate, anionic surfactant, defoaming agent and stabilizer, trade name: T-CD1, product of Fuji Photo Film Co., Ltd.) and 2-propanol under a conical nozzle pressure of 0.15 MPa, and subjected to a polyester brushing treatment.

The photosensitive polymer layer was subjected to light exposure in a pattern-making manner using a proximity-type exposure apparatus having an extra-high-voltage mercury lamp (product of Hitachi Electronics Engineering Co., Ltd.), wherein the substrate and a mask (quartz-made photomask having an image pattern formed thereon) were vertically held while keeping a distance between the surface of the photomask and the photosensitive polymer layer of 200 µm away from each other, under an exposure energy of 63 mJ/cm² for R region, 55 mJ/cm² for G region, and 40 mJ/cm² for B region. The substrate was baked at 230°C for one hour to obtain a positive a-plate layer having a retardation pattern, yielding color filter substrate 7.

The color filters are adjusted in a manner that R filter is on the R region, G filter on the G region, and B filter on the B region.

### (Preparation of color filter substrate 8)

A color filter substrate having a black matrix and three (RGB) color filters on a glass substrate was prepared using the transfer system (made by Fuji Photo Film Co., Ltd.) described on page 25 of Fujifilm Research & Development No. 44 (1999). On the color filter substrate, positive a-plate layer 1 and negative c-plate layer 1 were formed in a similar manner to the above in this order to obtain color filter substrate 8.

### (Example 5: Fabrication of a VAmode liquid-crystal display device)

Transparent electrode films were formed by sputtering ITO on color filter substrate 1 and an opposing substrate in the form of a glass substrate on which a TFT layer had been provided. A polyimide alignment layer was further provided over each substrate. A sealing agent of epoxy resin containing spacer particles was printed at a position corresponding to the frame of the black matrix provided around groups of color filter pixels, and color filter substrate 1 and the opposite substrate were bonded together at a pressure of 10 kg/cm. Next, a heat treatment was conducted for 90 minutes at 150°C to cure the sealing agent, yielding a laminate of two substrates. The air was evacuated under vacuum from the substrate laminate. The substrate laminate was then placed in the atmosphere again and liquid crystals were filled into the gap between the two substrates to obtain a VA mode liquid-crystal cell. HLC2-2518 polarizing plates made by Sanritz (Ltd.) were bonded to the two surfaces of the VA mode liquid-crystal cell. A cold cathode tube backlight for a liquid-crystal display device in the form of a white three-wavelength fluorescent lamp of adjustable color was fabricated by mixing 50:50 weight ratios of phosphors in the form of BaMg₂Al₁₆O₂₇: Eu and Mn, and LaPO₄: Ce and Tb, as green (G) ; employing Y₂O₃: Eu as red (R) ; and employing BaMgAl₁₀O₁₇: Eu as blue (B). The above liquid-crystal cell equipped with the polarizing plates was positioned on the above backlight to obtain the VA mode liquid-crystal display device of Example 5.

### (Example 6: Fabrication of a VAmode liquid-crystal display device)

Liquid-crystal display device of Example 6 was prepared in a similar manner to that of Example 5 except that color filter substrate 2 was used instead of color filter substrate 1.

### (Example 7: Fabrication of a VA mode liquid-crystal display device)

Liquid-crystal display device of Example 7 was prepared in a similar manner to that of Example 5 except that color filter substrate 3 was used instead of color filter substrate 1.

### (Example 8 : Fabrication of a VA mode liquid-crystal display device)

Liquid-crystal display device of Example 8 was prepared in a similar manner to that of Example 5 except that color filter substrate 4 was used instead of color filter substrate 1.

### (Comparative example 2: Fabrication of a VA mode liquid-crystal display device)

Liquid-crystal display device of Comparative example 2 was prepared in a similar manner to that of Example 5 except that color filter substrate 5 was used instead of color filter substrate 1.

### (Comparative example 3: Fabrication of a VA mode liquid-crystal display device)

Liquid-crystal display device of Comparative example 3 was prepared in a similar manner to that of Example 5 except that color filter substrate 6 was used instead of color filter substrate 1.

### (Comparative example 4: Fabrication of a VA mode liquid-crystal display device)

Liquid-crystal display device of Comparative example 4 was prepared in a similar manner to that of Example 5 except that color filter substrate 7 was used instead of color filter substrate 1.

### (Comparative example 5: Fabrication of a VA mode liquid-crystal display device)

Liquid-crystal display device of Comparative example 5 was prepared in a similar manner to that of Example 5 except that color filter substrate 8 was used instead of color filter, substrate 1.

The results of visual evaluation in a black state (under no applied voltage) in the rightward direction from the front, in 45° upper-rightward direction of Examples 5, 6, 7, and 8 and Comparative Examples 2, 3, 4, and 5 are given in Table 3.

**Table 4**

| Sample | Visual evaluation results |
|---|---|
| Example 5 | Clear image was displayed, although color blurring and light leakage during black display was slightly observable. |
| Example 6 | Clear image was displayed, and no color blurring or light leakage during black display was observable. |
| Example 7 | Clear image was displayed, and no color blurring or light leakage during black display was observable. |
| Example 8 | Clear image was displayed, although color blurring and light leakage during black display was slightly observable. |
| Comparative Example 2 | Color blurring and light leakage during black display were observed and no clear image was displayed. |
| Comparative Example 3 | No color blurring during black display was observable, but light leakage was observed and no clear image was displayed. |
| Comparative Example 4 | No color blurring during black display was observable, but light leakage was observed and no clear image was displayed. |
| Comparative Example 5 | Color blurring and light leakage during black display were observed and no clear image was displayed. |

### EFFECT OF INVENTION

The substrate for liquid crystal display device of the present invention can be produced with generating less negative effect on the performance of the color filter layer, and contributes to improvement of the contrast-viewing angle characteristics of a VA-mode liquid crystal display device.

## Claims

1. A substrate for liquid crystal display device comprising, between a substrate and a color filter layer, a positive uniaxial optically anisotropic layer having an optical axis in an in-plane direction of the substrate and a negative uniaxial optically anisotropic layer having an optical axis in a direction perpendicular to the substrate surface.

2. The substrate for liquid crystal display device according to claim 1 comprising the substrate, the negative uniaxial optically anisotropic layer having an optical axis in a direction perpendicular to the substrate surface, the positive uniaxial optically anisotropic layer having an optical axis in an in-plane direction of the substrate, and the color filter layer in this order.

3. The substrate for liquid crystal display device according to claim 2, wherein the positive uniaxial optically anisotropic layer having an optical axis in an in-plane direction of the substrate is formed directly on the negative uniaxial optically anisotropic layer having an optical axis in a direction perpendicular to the substrate surface, and the negative uniaxial optically anisotropic layer functions as an alignment layer.

4. The substrate for liquid crystal display device according to claim 1 comprising the substrate, the positive uniaxial optically anisotropic layer having an optical axis in an in-plane direction of the substrate, the negative uniaxial optically anisotropic layer having an optical axis in a direction perpendicular to the substrate surface, and the color filter layer in this order.

5. The substrate for liquid crystal display device according to any one of claims 1 to 4, which comprises an alignment layer and the positive uniaxial optically anisotropic layer having an optical axis in an in-plane direction of the substrate which is formed directly on the alignment layer.

6. The substrate for liquid crystal display device according to any one of claims 1 to 5, wherein the negative uniaxial optically anisotropic layer having an optical axis in a direction perpendicular to the substrate surface consists of a polyimide material.

7. The substrate for liquid crystal display device according to any one of claims 1 to 6, wherein the positive uniaxial optically anisotropic layer having an optical axis in an in-plane direction of the substrate or the negative uniaxial optically anisotropic layer having an optical axis in a direction perpendicular to the substrate surface is a layer formed of a composition comprising a liquid crystal compound having at least one reactive group.

8. The substrate for liquid crystal display device according to claim 7, wherein the reactive group is a radically polymerizable group or a cationically polymerizable group.

9. The substrate for liquid crystal display device according to claim 8, wherein the radically polymerizable group is selected from the group consisting of acrylic group and methacrylic group, and the cationically polymerizable group is selected from the group consisting of vinyl ether group, oxetanyl group, and epoxy group.

10. The substrate for liquid crystal display device according to any one of claims 7 to 9, wherein the liquid crystal compound for the negative uniaxial optically anisotropic layer having an optical axis in a direction perpendicular to the substrate surface is a discotic liquid crystal.

11. The substrate for liquid crystal display device according to any one of claims 7 to 10, wherein the liquid crystal compound for the positive uniaxial optically anisotropic layer having an optical axis in an in-plane direction of the substrate is a rod-like liquid crystal compound.

12. The substrate for liquid crystal display device according to any one of claims 7 to 11, wherein the liquid crystal compound for the positive uniaxial optically anisotropic layer having an optical axis in an in-plane direction of the substrate has at least one radically polymerizable group and at least one cationically polymerizable group at the same time.

13. The substrate for liquid crystal display device according to any one of claims 1 to 12, wherein the retardation of the positive uniaxial optically anisotropic layer having an optical axis in an in-plane direction of the substrate is formed in a patterned manner corresponding to the colors displayed by the color filter.

14. A liquid crystal display device which has the substrate for liquid crystal display device according to any one of claims 1 to 13.

15. The liquid crystal display device according to claim 14, employing VA mode as a liquid crystal orientation mode.
